# EUROPEAN PATENT APPLICATION

(11) **EP 1 170 117 A1**
(43) Date of publication of application: **09.01.2002**
(21) Application number: 00902855.6
(22) Date of filing: 08.02.2000
(51) Int. Cl.: B29C 70/44, B29B 11/14, B32B 1/08

(54) **FRP CYLINDRICAL BODY AND PRODUCTION METHOD THEREOF**

(30) Priority: 17.02.1999 JP 3875499
(71) Applicant: TORAY INDUSTRIES, INC., Tokyo 103-8666 (JP)
(72) Inventor: SEKIDO, Toshihide, Otsu-shi Shiga 520-0046 (JP); ITO, Toshihiro, Otsu-shi Shiga 520-0842 (JP)
(74) Representative: Coleiro, Raymond
(86) International application number: JP0000673
(87) International publication number: WO0048823

(57) **Abstract**

The present invention relates to a method of producing an FRP tubular body which is characterized in that a resin distribution medium and a reinforcing fibre substrate are arranged at the outer periphery or inner periphery of a tubular or solid core and, after covering at least said resin distribution medium and reinforcing fibre substrate with an airtight material, the interior is placed under vacuum, and along with injection of resin and distribution thereof in the resin distribution medium surface direction, impregnation of the reinforcing fibre substrate is effected. In the method of producing an FRP tubular body relating to the present invention, by integrally coupling an FRP tubular body produced in the form of two or more divided components, it is possible to produce an FRP tubular body of even greater diameter. In addition, it is also possible to produce an FRP tubular body having both straight and curved portions.

Again, the present invention also relates to an FRP tubular body which is characterized in that an FRP layer and a resin distribution medium are concentrically integrally coupled. The tubular body of the present invention can be utilized with the tubular core remaining as it is, and by arranging reinforcing fibre substrate at both the inner and outer faces of the resin distribution medium it is possible to produce a large size tubular body with a sandwich structure.

In accordance with the FRP tubular body of the present invention and the method of production thereof, there are substantially no restrictions on length and diameter, and even long and large-diameter FRP tubular bodies can be moulded easily and cheaply. Again, since no special moulding equipment is required, it is possible for this reason too to produce a desired FRP tubular body easily and cheaply.

## Description

### Technical Field

The present invention relates to an FRP tubular body, in particular to a long, large diameter or curved FRP tubular body, and to a method for the production thereof.

### Background Art

As a lightweight, high-strength material, FRP (fibre reinforced plastic) is the subject of attention in various industrial fields, and CFRP (carbon fibre reinforced plastic) is a particular focus of attention on account of its outstanding mechanical properties, etc. If one considers the example of large tubular bodies, where these are made of metal they are heavy and their handling is poor. Furthermore, there is a fear of rusting. At the time of their employment, large-size heavy machinery is required and the base foundations need to be made firm. Again, in the case of curved supports, deflection under their own weight is considerable and there are limits to the length of the arm. Moreover, since their impact absorption capacity is not all that high, in the case for example of the impact between a motor vehicle and such a support, there is considerable damage to the motor vehicle and also the effects on the vehicle occupants are considerable.

On the other hand, in the case of the moulding of FRP tubular bodies, normally the filament winding method or methods using prepregs are employed but these suffer from the following problems.

When FRP tubular bodies are fabricated by means of the filament winding method, normally a mandrel is fitted to a winding means and resin-impregnated reinforcing fibre is wound onto the mandrel, but in the fabrication of a long large-diameter FRP tubular body, for example a large size tubular body of outer diameter about 5 m and length about 10 m by the filament winding method, in addition to various problems from the point of view of the operating environment, hygiene and safety, there are also limitations in terms of equipment in that the overall weight becomes excessive. Furthermore, in the case of the pultrusion method, the pulling force becomes exceedingly large and in practice fabrication becomes impossible.

Again, there is also the method of winding prepreg onto a core but since it is necessary to heat the prepreg in an oven to bring about curing, there are still limitations in terms of the diameter and length which can be moulded, and the fabrication of large-diameter long FRP tubular bodies is difficult. Furthermore, since a stage for fashioning or preparing the prepreg itself, a stage for the winding thereof and a stage for heating and curing are all required, there is the problem that production costs are raised. Moreover, since prepregs generally possess sticky characteristics (tackiness), there is the problem that handling is poor.

The present invention relates to the construction of large diameter and long, or curved, FRP tubular bodies which can be easily and cheaply produced, and a method for the production thereof.

### Disclosure of Invention

The present invention relates to a method for the production of an FRP tubular body which is characterized in that a resin distribution medium (which may jointly comprise a core material or the inner core) and a reinforcing fibre substrate are arranged at the outer periphery or inner periphery of a tubular or solid core and, after covering at least said resin distribution medium and reinforcing fibre substrate with an airtight material, the interior is placed under vacuum, and along with injection of the resin and distribution thereof in the resin distribution medium surface direction, impregnation of the reinforcing fibre substrate is effected. By the FRP tubular body production method relating to the present invention, it is possible to produce still larger size FRP tubular bodies by using a core which is divided into two or more parts in its circumferential direction, and the obtained FRP tubular body divided into two or more parts in its circumferential direction is integrally coupled. In addition, integral moulding is also possible in a state in which straight and curved portions are continuously connected, by employing a hollow tube as the core, around which the resin distribution medium and reinforcing fibre substrate are arranged, and using a mould with a curved cavity as the airtight material the interior is placed under vacuum and the hollow tube caused to expand, after which resin is injected and caused to impregnate the reinforcing fibre via a resin distribution medium.

Again, the present invention relates to an FRP tubular body which is characterized in that an FRP layer and a resin distribution medium are concentrically integrally coupled.

The tubular body of the present invention can have a construction possessing straight and curved portions, or it can have a construction divided into two or more components in the circumferential direction with said divided components being integrally coupled together. Furthermore, a tubular core can be utilized left as it is, and by using a resin distribution medium having grooves at the surfaces and arranging reinforcing fibre substrates at both the inner and outer faces of the resin distribution medium, it is possible to produce large size tubular bodies with a sandwich structure.

### Brief Explanation of the Drawings

- Figure 1: This is a partial perspective view of an FRP tubular body relating to an embodiment of the present invention.
- Figure 2: This is a perspective view showing a method of producing the FRP tubular body of Figure 1.
- Figure 3: This is a perspective view of a tubular core illustrating another method of producing the FRP tubular body.
- Figure 4: This is a partial perspective view of an FRP tubular body relating to another embodiment of the present invention.
- Figure 5: This is a perspective view of the core material of the FRP tubular body in Figure 4.
- Figure 6: This is a perspective view showing a method of producing the FRP tubular body of Figure 4.
- Figure 7: This is a side view of an FRP curved support relating to an embodiment of the present invention.
- Figure 8: This is an enlarged sectional view of the flange member in the case where the support in Figure 7 has a flange member.
- Figure 9: This is a partial sectional view of a support showing an example where the flange is integrally moulded.
- Figure 10: This is a transverse sectional view of an FRP tubular body relating to another embodiment of the present invention.
- Figure 11: This is a partial sectional view showing another joint structure for the divided components.
- Figure 12: This is a partial sectional view showing yet another joint structure for the divided components.
- Figure 13: This is a partial sectional view showing an example of the case where a sandwich structure is adopted for the divided components.
- Figure 14: This is an outline perspective view showing another example of the shape of the tubular portion.
- Figure 15:: This is an outline perspective view showing yet another example of the shape of the tubular portion.
- Figure 16:: This is an outline perspective view showing yet another example of the shape of the tubular portion.
- Figure 17:: This is an outline perspective view showing yet another example of the shape of the tubular portion.
- Figure 18:: This is an outline perspective view showing yet another example of the shape of the tubular portion.

### Explanation of the numerical codes

- 1, 27, 41: FRP tubular body
- 2, 11, 21: tubular core
- 3: FRP layer
- 4: resin distribution medium
- 5: reinforcing fibre substrate
- 6, 29: airtight material
- 12: large groove
- 13: small groove
- 22: FRP layer
- 23, 71: core material
- 24a, 24b: FRP layer
- 25: large groove
- 26: small groove
- 28a: first reinforcing fibre substrate
- 28b: second reinforcing fibre substrate
- 31: FRP curved support
- 32: support portion
- 33: arm portion
- 34: flange member
- 34a: flange
- 42, 81, 82, 83, 84, 85: tubular portion
- 43, 53, 63, 73: divided components
- 44, 56: connecting members
- 45: stepped portion
- 46: stepped portion of end face of connecting member
- 54, 64: end face
- 55: recessed portion
- 72a, 72b: FRP skin
- 74: rib

### Best Mode for Carrying Out the Invention

The method of producing the FRP tubular body relating to the present invention comprises a method which is characterized in that a resin distribution medium is arranged at the outer periphery of a core, and around this is arranged a fibre reinforcing substrate and after covering the whole with an airtight material (vacuum bag), the interior covered by the airtight material is placed under vacuum, and along with injection of the resin and distribution thereof in the resin distribution medium surface direction, there is impregnation of the aforesaid reinforcing fibre substrate.

In an FRP tubular body as described above, the FRP layer can be composed of a sandwich structure with FRP layers arranged at both the inner and outer faces of a tubular core material. In such circumstances, it is preferred that the core material has grooves for resin distribution and serves both as a core material and as a resin distribution medium. In order to reduce the weight, the core material is preferably a foam.

Specifically, one example of the method of producing an FRP tubular body relating to the present invention is a method which is characterized in that, around the outer periphery of a core, there are arranged in turn a first reinforcing fibre substrate, a combined core material/resin distribution medium of tubular shape which has grooves for resin distribution, and a second reinforcing fibre substrate, and, after covering the whole with an airtight material, the interior covered by the airtight material is placed under vacuum, a resin then injected into a groove in the aforesaid resin distribution medium and, along with distribution thereof in the resin distribution medium surface direction, impregnation of the first and second reinforcing fibre substrates is effected. In this method, by further interposing a resin distribution medium between the outer periphery of the core and the first reinforcing fibre substrate, along with distribution of the injected resin in the resin distribution medium surface direction it is possible to bring about more reliable impregnation of the first reinforcing fibre substrate.

Still more specifically, in the aforesaid two production methods, the core of the body which is being moulded and the reinforcing fibre substrate, etc, are disposed horizontally and, at one or two locations at the uppermost portion of the tubular body arrangement, there are provided vacuum suction lines extending in the lengthwise direction. Moreover, resin injection lines are provided at one or two locations at the lowermost portion, and where there are two such locations the injection of the resin is commenced simultaneously. If a time difference arises, a leftwards/rightwards imbalance occurs in the resin flowing in the circumferential direction and the flow of the slower resin may be impaired.

Again, depending on the circumstances (in particular in the case of a diameter of several metres), a vacuum suction line may also be provided at an intermediate location other than at the uppermost portion, and when the resin injected from the lowermost portion reaches this vacuum suction line, further resin may then also be injected from this vacuum suction line (because the fluidity is better the lower the resin resistance in the resin flow direction from the injection position).

Where a tubular core is employed, this may be left as part of the FRP tubular body, but where it is necessary that the tubular core be removed after FRP moulding due to, for example, the requirement to further reduce the weight, a release material such as a nylon woven fabric (optionally the surface is Teflon-coated, for example) is interposed between the core and the reinforcing fibre substrate, in particular the first reinforcing fibre substrate, prior to the moulding, so that it is then possible following the moulding to remove the tubular inner core along with the release material. In the case where the tubular core is left behind, the tubular core itself acts as a support, so that no separate large moulding means is necessary and, furthermore, restrictions in terms of length and diameter are essentially eliminated. Consequently, long items and those of large diameter with an external diameter of 1 m or more can readily be produced.

Furthermore, it is possible for the remaining tubular core and resin distribution medium to take some of the burden from the FRP layer in terms. of loads of different mechanical characteristics, such as the bending and torsional stresses which act thereon, and in the case where a gas or fluid for example is sealed in the interior of the tubular body, not only is it possible to maintain greater gas-tightness but even if the FRP layer sustains damage or cracks, leakage of the gas or liquid can be prevented.

In the case where metal is used as the tubular core, as well as advantages of the kind described above, in the case where the tubular body is subsequently to be connected to some separate member, by prior precision machining of the metal core beforehand such connection can be made highly accurate. Again, in the case where the tubular inner core is an engineering plastic or a prior-moulded FRP, it is possible to produce a reinforced FRP tubular body while still maintaining lightness of weight.

On the other hand, the FRP tubular body of the present invention can also be produced as an integrally-formed FRP curved support having a support portion and an arm portion which curves and extends from said support portion, and in such circumstances the angle of the curving and extending arm portion in terms of the support portion preferably lies in the range 5 to 120°. The FRP curved support relating to the present invention is especially suitable for long items where the combined length of the support portion and the arm portion is at least 3 m.

This FRP curved support may be composed only of the support portion and the arm portion but, by providing a flange member at the end face of the support portion away from the arm, the FRP curved support can be readily secured to a base or other such fitment. The flange member can be constructed separately from the supporting portion and connected to the supporting portion by means of adhesion or fastening, or a flange can also be integrally formed with the support portion.

Vacuum moulding may also be carried out based on the present invention with reinforcing fibre substrate again arranged around the joint.

In the method of producing an FRP curved support relating to the present invention, the support portion and the arm portion can be integrally moulded by arranging reinforcing fibre substrate around a combined core/resin distribution medium at the surface of which resin flow channels have been formed, then placing these in a mould with a curved cavity to serve as the airtight material and applying a vacuum to the interior, after which resin is injected so that along with distribution thereof at the surface of the reinforcing fibre substrate, impregnation of the reinforcing fibre substrate is effected.

Again, the support portion and the arm portion can be integrally moulded by arranging a resin distribution medium around a hollow tube as the core and arranging reinforcing fibre on top, after which these are introduced into a mould with a curved cavity and the interior placed under vacuum, and along with injection of resin and distribution thereof at the surface of the reinforcing fibre substrate, impregnation of the reinforcing fibre substrate is effected, and, furthermore, a pressure is applied within the hollow tube.

In the FRP curved support relating to the present invention as described above, it is possible for both the support portion and the arm portion to be made of FRP, so that when compared to conventional such metal-made items it is possible to markedly reduce the weight and, furthermore, the handling properties are outstanding. Being light in weight, no heavy machinery is required at the time of employment and the strength required of the base or the like is also reduced.

Moreover, being made of FRP, there are substantially no problems in terms of rusting. Furthermore, since moulding is easy, it is also possible to carry out on-site moulding at the location where the support is to be positioned, and a reduction in costs is achieved due to the lowering of transportation expenses.

In addition, since it is possible to achieve a considerable weight reduction not just in the case of the support portion but also in the case of the arm portion which curves and extends therefrom, deflection under its own weight is kept to a low level compared to the case of a metal-made item, and so it is possible to increase the length of the arm portion. Furthermore, an FRP curved support is outstanding in its impact absorption capacity compared to a metal-made item, so that even in the case of motor vehicle impact, or the like, motor vehicle damage may be kept low and it is also possible to suppress the adverse effects on the vehicle passengers.

Thus, an FRP curved support with outstanding characteristics not found hitherto is easily, reliably and cheaply produced by the aforesaid production methods relating to the present invention.

Moreover, in the present invention, it is also possible to produce FRP tubular bodies of large size by the integral coupling of divided members, based on division into two or more in the circumferential direction, obtained using a core which has been divided into two or more parts in the circumferential direction.

Various modes can be adopted for connecting these divided components. For example, a construction is possible where stepped portions are formed at the opposing end faces of adjacent divided components and, by inserting connecting members between the opposing end faces, and fitting together the connecting members and stepped portions, the divided components are thereby joined together.

Again, there can be employed a construction in which recesses are formed at the opposing end faces of adjacent divided components and, by fitment of a connecting member into these recesses, the opposing end faces are thereby butt-joined.

Furthermore, there can be employed a construction in which mutually-engaging projecting/recessed parts are formed at the opposing end faces of adjacent divided components, so that the end faces may be directly coupled together.

The divided components can themselves have an FRP single sheet structure but, in order to raise the strength and rigidity, while at the same time maintaining the lightness of the whole body, it is preferred that the aforesaid divided components have a sandwich structure in which FRP skin layers are provided at both faces of a core material (which also serves as the resin distribution medium).

The tubular portion of the FRP tubular body is not restricted to a circular tube and it may also have a conical form or be a cylinder of triangular, quadrangular or polygonal cross-section. In the case where it has a tubular portion of circular or elliptical cross-section, the divided components thereof may be constructed from circular arc-shaped members, while in the case where it has a tubular portion of triangular, quadrangular or polygonal cross-section, the divided components may be composed of flat shaped or bent panel members where flat sheets are combined in an L-shape or U-shape.

Where divided components are to be integrally coupled, the number of such divided components may be two or more than two, with the number of divisions being decided in accordance with the outer diameter of the finally-formed tubular portion. Preferably, the greater the outer diameter the greater the number of divisions, so that in this way the individual divided components are kept small and their moulding is facilitated.

Thus, in the case of construction from components based on the division of the tubular portion of the tubular body in two or more parts in the circumferential direction, even in the case of a large size such tubular portion where the outer diameter is 3 m or more, the size of the individual divided components is small. Consequently, by division into a suitable number of parts, each divided component is a small part relatively close to being flat, so that moulding, and the arrangement and laying-up of the reinforcing fibre at the time of moulding, are considerably facilitated. Again, there is no need to use a large mould and it is possible thereby to further reduce production costs.

Moreover, since the divided components can be integrally coupled via connecting members or by fitting together their end faces, on-site connection and assembly are possible. Thus, when transporting to a site, the divided components are of small size and transportation is made easy and cheap.

Again, by increasing the number of divisions, it becomes possible to produce large FRP tubular bodies of outer diameter 10 m and above, the reliable production of which has not been possible hitherto.

Below, preferred practical embodiments of the present invention are explained with reference to the drawings.

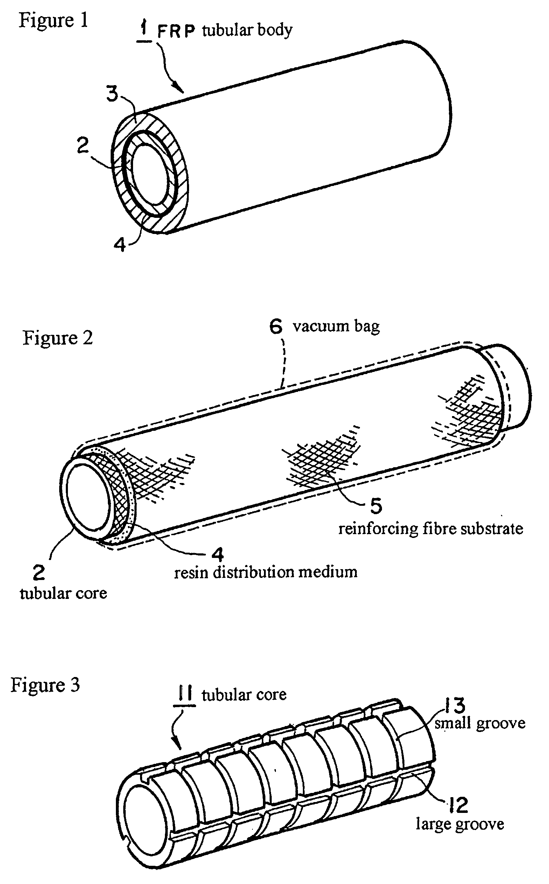

Figure 1 shows an FRP tubular body relating to an embodiment of the present invention. In this embodiment, the FRP tubular body **1** comprises tubular core **2**, an FRP layer **3** arranged around the outer periphery thereof, and a resin distribution medium **4** interposed between the tubular core **2** and FRP layer **3**, with tubular core **2** and FRP layer **3** being integrally coupled by means of resin.

The tubular core **2** may either comprise a resin or an FRP. Resin distribution medium **4** comprises for example a reticulate material, and as well as it being possible to effect resin distribution in the surface direction at the time of moulding, impregnation of the reinforcing fibre substrate can be carried out.

Consequently, such an FRP tubular body **1** may be produced for example as shown in Figure 2. In this method a resin distribution medium **4** is arranged at the outer periphery of tubular core **2**, and around this is arranged the reinforcing fibre substrate **5** and then, after covering the whole with an airtight material **6** (for example a vacuum bag), suction is applied to the interior covered by airtight material **6** to produce a vacuum state (a reduced pressure state), and along with injection of the resin and distribution thereof in the resin distribution medium **4** surface direction there is also impregnation of reinforcing fibre substrate **5**. Following the impregnation, the resin is cured and FRP layer **3** and tubular core **2** are integrally coupled. The tubular core **2** is left as an integral part of FRP tubular body **1**.

Instead of the aforesaid resin distribution medium **4** comprising a reticulate material, it is possible to form grooves for resin distribution in the outer periphery of the tubular core **2** so that said grooves provide the function of a resin distribution medium. For example, as shown in Figure 3, large grooves **12** which extend in the lengthwise direction and small grooves **13** which extend in the circumferential direction are cut into the outer periphery of tubular core **11**, and thus it serves both as a tubular core and as a resin distribution medium. Resin is injected from an end of a large groove **12** so that, while distribution of the resin is brought about, the impregnation of reinforcing fibre substrate can be effected.

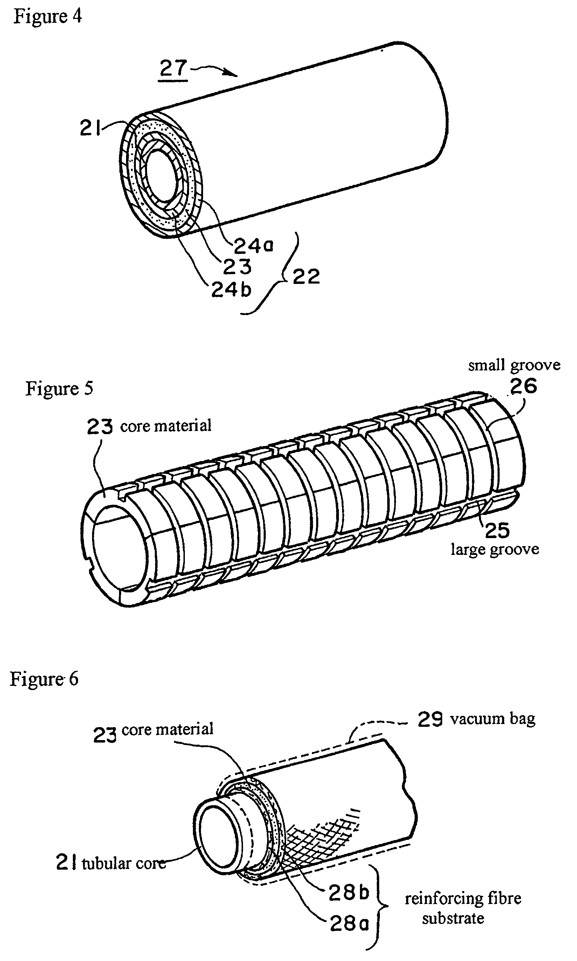

Moreover, in the present invention, it is possible to construct the FRP-containing layer of the FRP tubular body in the form of a sandwich structure. For example, as shown in Figure 4, FRP-containing layer **22** which is arranged around tubular core **21** has a sandwich structure with FRP layers **24a**, **24b** provided at both the inner and outer faces of a tubular core material **23**, and a structure can be produced with this FRP layer **22** integrally coupled to tubular core **21** by means of resin. Between FRP layer **22** and tubular core **21**, there may be interposed a resin distribution medium as described above, or grooves for resin distribution may be cut in the outer face of tubular core **21** so that it serves both as a tubular core and as a resin distribution medium.

It is preferred, as shown in Figure 5 for example, that grooves for resin distribution be cut in core material **23** and so this serves as both a core material and a resin distribution medium. In the example illustrated in Figure 5, large grooves **25** running in the lengthwise direction and small grooves **26** running in the circumferential direction are cut in the outer face of core material **23**, and impregnation of the reinforcing fibre substrate is effected while injecting and distributing resin from an end of a large groove **25**. In the case of the production of a sandwich structure as shown in Figure 4, it is preferred that such grooves **25**, **25** are also provided at the inner face of core material **23**. In order to facilitate formation of the core material in which grooves are cut, said core material may be divided in its circumferential direction.

An aforesaid large groove **25** should be provided in at least one location around the circumference and, preferably, another one is located on the opposite side, with the number being increased as the diameter is increased. The large groove **25** provided at the bottommost position is used as a resin injection line, while large grooves provided elsewhere may also be jointly used, depending on the circumstances, as vacuum suction lines.

This kind of FRP tubular body **27** with an FRP layer **22** having a sandwich structure can also be produced by the same method as above. For example, as shown in Figure 6, there are provided, in turn, around the outer periphery of tubular core **21**, a first reinforcing fibre substrate **28a**, a combined tubular core material/resin distribution medium **23** having grooves for resin distribution in its inner and outer faces, and a second reinforcing fibre substrate **28b**, and then, after covering the whole with airtight material **29**, the interior region covered by airtight material **29** is placed under vacuum, and while resin is injected and distributed from the end of a large groove **25**, impregnation of the reinforcing fibre substrates **28a**, **28b** is effected. Following impregnation, the resin is cured and the FRP layer **22** and tubular core **21** are integrally coupled.

Furthermore, in Figures 1, 2, 4 and 6, by interposing a release material comprising a woven fabric (not illustrated) between the tubular core and (first) reinforcing substrate, so as to make separation of these possible, following the FRP moulding the tubular core can be withdrawn from the FRP tubular moulded body. As a result, a further reduction in weight can be achieved compared to the case where the tubular core is integrally coupled to the FRP tubular body as described above.

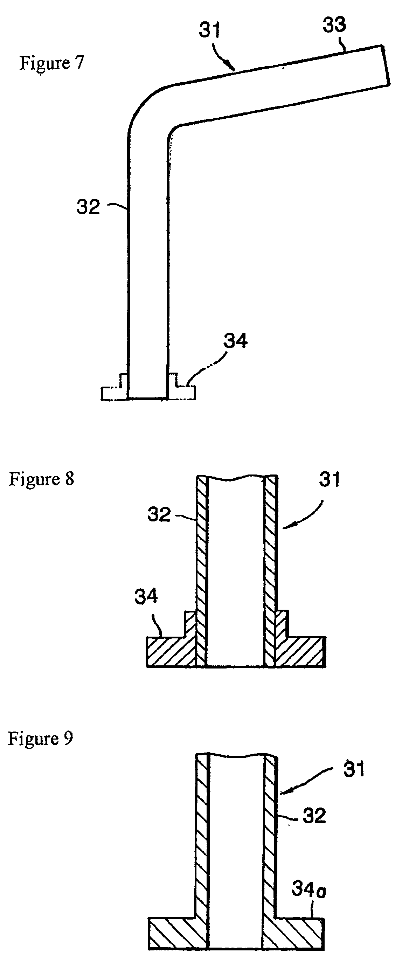

Figure 7 shows an FRP curved support **31** relating to an embodiment of the present invention. FRP curved support **31** has a support portion **32** and an arm portion **33** which curves from the upper end of said support portion **32** and extends at an angle. This support portion **32** and arm portion **33** are integrally moulded.

The structure of the FRP curved support **31** relating to the present invention is complete as it is but, in practice, it is most often employed fitted to a base or the like and so, as shown by the two sets of dotted lines in Figure 7, at the end of support portion **32** on the other side from the arm portion, that is to say at the bottom end of support portion **32** in this embodiment, it is preferred that there be provided a flange member **34** used for fitting and securing to a base or the like.

With regard to this flange member **34**, as shown in Figure 8 for example, said flange member **34** can be separately formed from the support portion **32** and this flange member **34** then joined to support portion **32** by adhesion or fastening. In the case of a flange member 34 of separate structure, there may be used for example a separately moulded FRP product or a durable metal such as stainless steel, and depending on the circumstances there can also be formed a hybrid structure of FRP and metal.

Again, the flange member can also be integrally moulded with the support portion **32**. For example, as shown in Figure 9, a flange **34a** comprising FRP can be integrally moulded with the support portion **32** at the bottom end of said support portion **32**. In such circumstances, joining together by adhesion or fastening is unnecessary and, furthermore, being an FRP moulded body connected to support portion **32**, it is possible to ensure sufficient strength and rigidity in flange portion **34a**.

Even where the length of such an FRP curved support **31** is 3 m or above, production can be carried out easily and cheaply by the production method described below. FRP curved support **31** is extremely light compared to a conventional such item made of metal, and even at a length of 3 m or above it has outstanding handling characteristics, so large-size heavy machinery or the like is not required at the time of employment. Furthermore, since the support as a whole is considerably reduced in weight, the load on the base or the like is also reduced, so the strength required of the base or the like is also lowered.

With regard to the support itself too, sufficiently high strength and rigidity can be ensured by suitable choice of the type of reinforcing fibre, the percentage impregnation and the type of resin, etc, in accordance with the usage objectives. Furthermore, being light, there is very little deflection under its own weight, and it is possible to produce long supports easily. Moreover, being made of FRP, there is fundamentally no problem of rusting. In addition, when compared to a metal-made item, the impact absorption capacity is excellent and it behaves advantageously in terms of motor vehicle impact and the like.

An FRP curved support **31** with the aforesaid outstanding characteristics can typically be produced easily and cheaply by either of the aforesaid two methods of production relating to the present invention. The flange member may be separately moulded and then connected to the support portion of the moulded FRP curved support, or the shape of the mould may be made to include a flange member, which is integrally moulded with the aforesaid support portion. An FRP curved support of specified shape can readily be integrally moulded by either of the aforesaid methods and, even when of long length, production can be carried out simply and cheaply.

The applications of the FRP curved support relating to the present invention are not particularly restricted, but to provide some examples it is suitable as a garage support, a support for signboards such as advertisements and road signs, a support to hold up a roof such as in the case of a petrol station/gasoline stand, or as a support for a veranda or for a canopy.

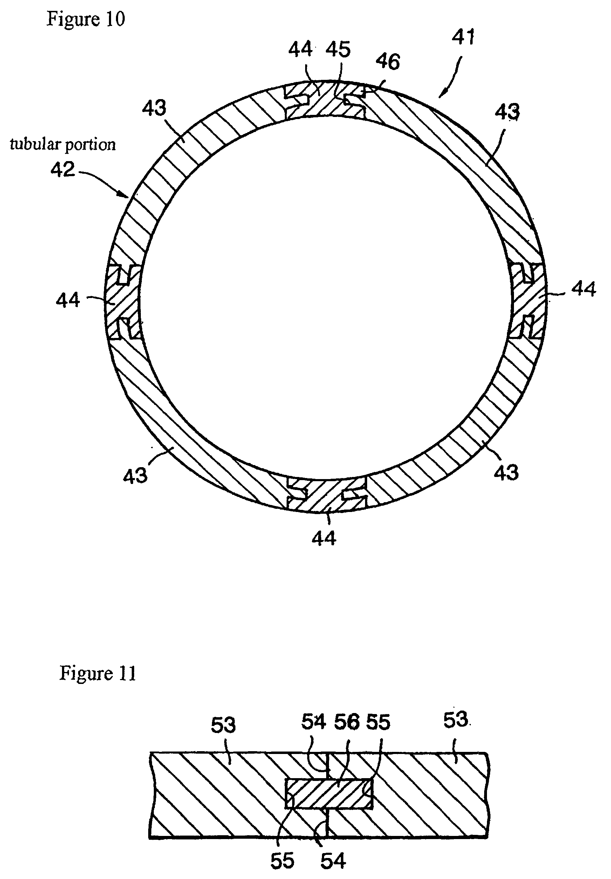

Figure 10 shows a cross-section of the tubular portion of an FRP tubular body **41** relating to another embodiment of the present invention. Tubular portion **42** of this FRP tubular body **41** has an external diameter of at least 3 m, and it is constructed as a connected body of components **43** based on division into two or more parts (in the example in the figure there are four) in the circumferential direction. Each divided component **43** is moulded as a circular-arc shaped component, and mutually adjacent such divided components **43** are integrally coupled via connecting members **44** interposed between them.

The opposing end faces of adjacent divided components **43** are moulded with stepped regions **45** of projecting/recessed shape, and both end faces of the connecting members **44** are also moulded with stepped regions **46** of projecting/recessed shape, so that the stepped region **45** on the divided component **43** side and the stepped region on the connecting member **44** side mutually fit together. After fitting the connecting members **44**, they are secured by adhesion or the like, so that there is integral connection between divided component **43**, connecting member **44** and divided component **43** continuously in the circumferential direction.

Connecting members **44** are separately moulded from the divided components **43** and, while they may be composed of metal or other such material, in order to maintain the lightness of the tubular body as a whole, and again in order to ensure good connection with the divided components **43**, it is preferred that they comprise the same FRP as said divided components **43**.

Constructions other than as described above can also be utilized for the integral coupling of the divided components. For example, as shown in Figure 11 recesses **55** can be formed at the opposing end faces **54** of mutually adjacent divided components **53**, then a flat connecting member **50** fitted in each recess **55** and connection effected with opposing end faces **54** butting.

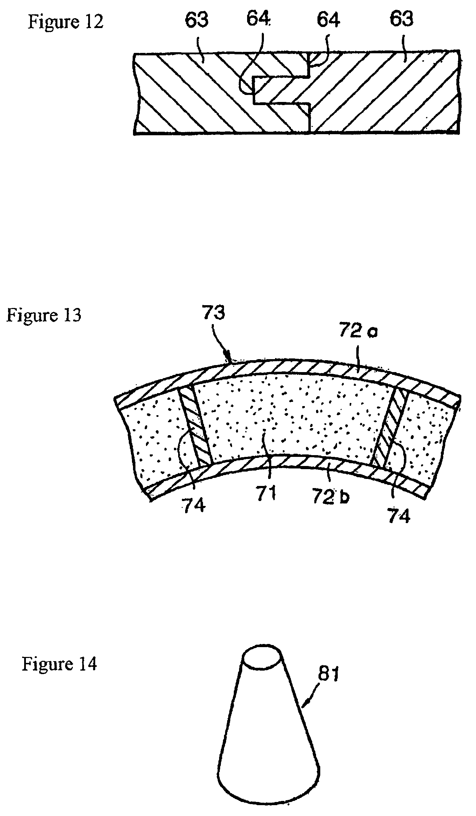

Again, as shown in Figure 12, the opposing faces **64** of mutually adjacent divided components **63** may be given projecting/recessed forms which mutually fit together, and construction effected by directly joining together the end faces **64** without an interposed connecting member.

Moreover, while the divided components themselves can be given a single sheet structure of FRP, a sandwich structure with a core material arranged between FRP skin sheets is more preferred in terms of satisfying all the requirements of lightness, strength and rigidity.

For example, as shown in Figure 13, a divided component **73** is preferred which has a sandwich structure in which FRP skin sheets **72a** and **72b** are arranged at the two faces of a core material **71**. In such a sandwich structure, where required, it is possible to provide ribs **74** at suitable positions at a suitable spacing. By means of ribs **74**, as well as it being possible to further'enhance the strength and rigidity, the shape retentivity is also improved. The material for ribs **74** may be wood or metal but, taking into account integral mouldability to FRP skin sheets **72a** and **72b**, it is again preferred that they comprise FRP. As the material for core material **71** there can be used wood or a foam, but from the point of view of lightness a foam of low specific gravity is preferred. In particular, by using such a core material **71** it is possible to enhance the thermal insulation properties.

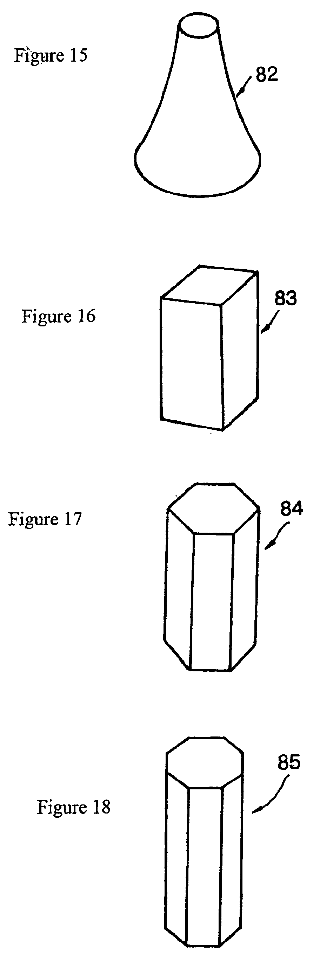

With regard to the shape of the tubular portion of the FRP tubular body relating to the present invention, providing it constitutes a tubular body any shape thereof can be employed. As well as the circular tubular shape of the kind shown in aforesaid Figure 10, there can be employed structures such as the circular conical frustum-shaped tubular portion **81** shown in Figure 14, the circular conical frustum-shaped tubular portion **82** where the generatrix curves as shown in Figure 15, the tubular portion **83** of quadrangular cross-section shown in Figure 16, the tubular portion **84** of hexagonal cross-section shown in Figure 17 and the tubular portion **85** of octagonal cross-section shown in Figure 18.

Furthermore the shape of each divided component can also be freely changed in accordance with the particular shape of the tubular portion as described above. In contrast to the divided components **43** shown in Figure 10 which comprise circular arc-shaped members of substantially fixed cross-sectional shape, in the case for example of the tubular portions **81** and **82** shown in Figure 14 and Figure 15, the divided members thereof while still be circular arc shaped will vary continuously in their cross-sectional shape. Again, in the case of tubular portions **83**, **84** and **85** shown in Figures 16 to 18, each divided component can be formed as a single flat-sheet shape or can be formed as an L-shaped or U-shaped panel member.

In this way, in the case where the components from which the tubular portion is constructed comprise a plurality of members by division in the circumferential direction, each divided component can be made small and moulding is simple, so it is possible in practice to produce a large-size FRP tubular body **41** of external diameter 3 m or more, easily and cheaply.

Furthermore, by employing a joint structure between divided components as shown in Figures 10 to 12, connection and assembly on site becomes possible.

Moreover, even where the tubular body as a whole is large, since each divided component can be moulded to a small size, there are essentially no restrictions in terms of moulding on the shapes of the divided components themselves, and it becomes possible to freely and easily produce tubular bodies of various shapes as shown in Figures 14 to 18, and a broadening of applications can be achieved.

As the reinforcing fibre of the FRP layer in the aforesaid FRP tubular bodies, it is preferred that there be used carbon fibre unidirectional material, woven material, mat or strands, or glass fibre unidirectional material, woven material, mat or roving, either on their own or in the form of mixtures. In particular, in order to achieve maximum effect in terms of weight reduction, the use of carbon fibre is preferred. Furthermore, with regard to the carbon fibre, rather than the carbon fibre yarn normally containing less than 10,000 filaments, the use of a carbon fibre filament tow where the number of filaments lies in the range 10,000 to 300,000, and preferably 50,000 to 150,000, is more outstanding in terms of the resin impregnation, the handling of the reinforcing fibre substrate and also the cost of the reinforcing fibre substrate, so this is preferred. Again, where a carbon fibre woven material is arranged at the surface of the FRP tubular body, there is enhanced surface design potential, so this is further preferred. Again, where required, or in accordance with the mechanical properties demanded, the reinforcing fibre substrate may be formed by superimposing a number of reinforcing fibre layers, and this reinforcing fibre substrate employed for resin impregnation. As the superimposed reinforcing fibre layers, there can be suitably superimposed layers of unidirectionally arranged carbon fibre or woven material layers, and the fibre orientation direction can be appropriately selected in accordance with the required strength direction.

It is preferred, in terms of the moulding characteristics and cost, that the FRP resin be a thermosetting resin such as an epoxy, unsaturated polyester, phenolic or vinyl ester resin. However, it is also possible to use thermoplastic resins such as nylon and ABS resin, or mixtures of thermosetting resin and thermoplastic resin.

As the core material, there can be used foam, wood or the like, but from the point of view of weight reduction a foam is preferred. As the foam material, there may be used polyurethane, polystyrene, polyethylene, polypropylene, polyimide, PVC, silicone or the like, and it is preferred that the specific gravity of the foam be selected from within the range 0.02 to 0.2. The type and specific gravity of the core material can be selected according to the properties demanded of the FRP tubular body and the type of resin used, etc. If the specific gravity is less than 0.02, there is a fear that sufficient strength will not be obtained. On the other hand, if the specific gravity exceeds 0.2 then, while the strength is raised, the weight is also increased and this goes against the objective of weight reduction.

Examples of applications of the FRP tubular body relating to the present invention include large-size tanks, waste gas ducts (chimneys, ducts for discharged gases within high-speed road tunnels, and the like), cooling tower containers, silos, water channel shutters, broadcasting masts, towers, revolving tubes in parks, and lamp posts, etc.

### Industrial Applicability

As explained above, in accordance with the FRP tubular body of the present invention and method of manufacture thereof, there are no substantial restrictions in terms of length and diameter, and long large-diameter FRP tubular bodies can be moulded easily and cheaply. Again, since no special moulding equipment is required, from this aspect too it is possible to produce the desired FRP tubular bodies easily and cheaply.

In addition, the FRP curved support of the present invention is light and easy to handle, does not require large heavy machinery or the like at the time of employment, permits the strength of the base to be lowered, and essentially shows no problem of rust generation. Furthermore, there is little deflection under its own weight and the length of the arm portion can readily be increased. Moreover, it can show an outstanding impact absorbing capacity in terms of motor vehicle impact and the like. Thus, it is possible to obtain a support with extremely outstanding properties not found with conventional metal-made items.

In addition, where the tubular portion is composed of a plurality of components by division in the circumferential direction, the moulding of each such divided component is easy and it becomes possible to produce large-size FRP tubular bodies of size 3 m and above, and even 10 m or above, both easily and cheaply. Again, large size moulds are unnecessary and, from this aspect too, production can be simplified and production costs lowered. Furthermore, by employing a joint construction for the divided components as shown in Figures 10 to 12, it becomes possible to carry out connection and assembly easily on site. Moreover, since each divided component is small, transportation is both cheap and easy.

## Claims

1. A method of producing an FRP tubular body which is **characterized in that** a resin distribution medium and a reinforcing fibre substrate are arranged at the outer periphery or inner periphery of a tubular or solid core and, after covering at least said resin distribution medium and reinforcing fibre substrate with an airtight material, the interior is placed under vacuum, and along with injection of resin and distribution thereof in the resin distribution medium surface direction, impregnation of the reinforcing fibre substrate is effected.

2. A method of producing an FRP tubular body according to Claim 1 where there is used a resin distribution medium having grooves at the surface.

3. A method of producing an FRP tubular body according to Claim 2 where the grooves used for resin distribution are formed as large grooves extending in the lengthwise direction and small grooves extending in the circumferential direction of the tubular body.

4. A method of producing an FRP tubular body according to Claim 1 where a reticulate material is used as the resin distribution medium.

5. A method of producing an FRP tubular body according to Claim 1 where reinforcing fibre substrate is arranged at both the inner and outer faces of the resin distribution medium.

6. A method of producing an FRP tubular body according to Claim 1 where the core, the resin distribution medium and the reinforcing fibre substrate are arranged substantially horizontally, and the vacuum suction line is arranged substantially at the uppermost portion and the resin injection line substantially at the lowermost portion extending in the lengthwise direction.

7. A method of producing an FRP tubular body according to Claim 6 where a plurality of vacuum suction lines and/or resin injection lines are provided side by side.

8. A method of producing an FRP tubular body according to Claim 6 or Claim 7 where, as well as at the uppermost portion, a vacuum suction line is provided at an intermediate position between the uppermost and lowermost portions.

9. A method of producing an FRP tubular body according to Claim 6 or Claim 7 where the vacuum suction line provided at an intermediate position also serves as a resin injection line.

10. A method of producing an FRP tubular body according to Claim 3 where a large groove extending in the lengthwise direction also serves 'as a vacuum suction line.

11. A method of producing an FRP tubular body according to Claim 1 or Claim 5 where a woven-form reinforcing fibre substrate is wound under tension along the outer periphery of the core and/or the resin distribution medium.

12. A method of producing an FRP tubular body according to Claim 1 which is **characterized in that** a material with release properties is arranged between the core and the reinforcing fibre substrate and, following FRP moulding, the core is separated from the FRP tubular body.

13. A method of producing an FRP tubular body according to Claim 1 which is **characterized in that** there is used a hollow tube as the core, around which are arranged the resin distribution medium and reinforcing fibre substrate, and as the airtight material there is employed a mould having a curved cavity, the interior of which is placed under vacuum so that the hollow tube is caused to expand, after which resin is injected and the reinforcing fibre substrate impregnated via the resin distribution medium, and straight and curved regions are integrally moulded.

14. A method of producing an FRP tubular body according to Claim 13 where an internal pressure is applied to the hollow tube.

15. A method of producing an FRP tubular body according to Claim 1 which is **characterized in that** the core is divided into two or more parts in the circumferential direction, and the obtained FRP tubular body divided into two or more in the circumferential direction is integrally coupled.

16. A method of producing an FRP tubular body according to Claim 15 which is **characterized in that** the integral body is produced by fitting together the end faces of an FRP tubular body which has been split into two or more in the circumferential direction.

17. A method of producing an FRP tubular body according to Claim 15 which is **characterized in that** the integral body is produced via connecting members provided between the end faces of an FRP tubular body which has been split into two or more in the circumferential direction.

18. An FRP tubular body which is **characterized in that** an FRP layer and a resin distribution medium are concentrically integrally coupled.

19. An FRP tubular body according to Claim 18 which has an inner layer core.

20. An FRP tubular body according to Claim 19 where the resin distribution medium is interposed between the core and the ERP layer.

21. An FRP tubular body according to Claim 18 having a sandwich structure in which an FRP layer is arranged at both the inner and outer faces of the resin distribution medium.

22. An FRP tubular body according to Claim 18 where the resin distribution medium has grooves for resin distribution.

23. An FRP tubular body according to Claim 18 which has straight and curved portions.

24. An FRP tubular body according to Claim 23 where the combined length is at least 3 m.

25. An FRP tubular body according to Claim 23 where a flange is provided at the end.

26. An FRP tubular body according to Claim 25 where the flange is integrally moulded with the FRP tubular body.

27. An FRP tubular body comprising components formed by division into two or more parts in the circumferential direction, and said divided components are integrally coupled.

28. An FRP tubular body according to Claim 27 where an FRP layer and a resin distribution medium are concentrically integrally coupled.

29. An FRP tubular body according to Claim 27 where the diameter is at least 3 m.

30. An FRP tubular body according to Claim 27 where projecting and recessed portions which mutually fit together are formed at opposing end faces of adjacent divided components, and the end faces are directly joined together.

31. An FRP tubular body according to Claim 27 where the divided components are joined together via connecting members.

32. An FRP tubular body according to Claim 27 where the divided components are circular arc-shaped components.

33. An FRP tubular body according to Claim 27 where the divided components comprise flat or bent sheet-shaped panel components.
